(19) Europäisches Patentamt / European Patent Office / Office européen des brevets

(11) **EP 3 424 667 B1**

(12) **EUROPEAN PATENT SPECIFICATION**

(45) Date of publication and mention
of the grant of the patent:
**29.10.2025 Bulletin 2025/44**

(21) Application number: **18185623.8**

(22) Date of filing: **02.03.2012**

(51) International Patent Classification (IPC):
*B29C 44/24* (2006.01)      *B29C 44/50* (2006.01)
*B29C 44/60* (2006.01)      *B29C 44/22* (2006.01)
*C08J 9/08* (2006.01)       *C08J 9/12* (2006.01)
*B29C 48/12* (2019.01)      *B29C 48/21* (2019.01)
*B29C 48/29* (2019.01)      *B29C 48/285* (2019.01)
*B29C 48/30* (2019.01)      *B29C 48/49* (2019.01)
*B29C 48/90* (2019.01)      *B29C 48/95* (2019.01)
*B29C 48/00* (2019.01)      *B29C 48/06* (2019.01)

(52) Cooperative Patent Classification (CPC):
C08J 9/08; B29C 44/22; B29C 44/24; B29C 44/50;
B29C 44/605; B29C 48/0012; B29C 48/06;
B29C 48/12; B29C 48/21; B29C 48/29;
B29C 48/297; B29C 48/304; B29C 48/49;
B29C 48/90; B29C 48/95;             (Cont.)

(54) **PROCESS FOR MANUFACTURING A PLASTIC COMPOSITE PROFILE**

VERFAHREN ZUR HERSTELLUNG EINES KUNSTSTOFFVERBUNDMATERIALPROFILS

PROCÉDÉ DE FABRICATION D'UN PROFILÉ COMPOSITE EN PLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2019 Bulletin 2019/02**

(62) Document number(s) of the earlier application(s) in
accordance with Art. 76 EPC:
**12157978.3 / 2 634 210**

(73) Proprietor: **Orac Holding NV
8400 Oostende (BE)**

(72) Inventor: **COTTYN, Johan
B-8490 Snellegem (BE)**

(74) Representative: **IPLodge bv
Tavernierkaai 2 bus 7
2000 Antwerpen (BE)**

(56) References cited:
**JP-A- 2001 277 399      US-A- 6 053 214
US-A1- 2005 159 496      US-B1- 6 203 651**

(52) Cooperative Patent Classification (CPC): (Cont.)
**C08J 9/122;** B29K 2025/04; B29K 2995/0063;
B29K 2995/0064; B29K 2995/0094;
B29K 2995/0097; B29L 2031/001; B29L 2031/722;
C08J 2201/03; C08J 2325/06

## Description

## Technical field of the invention

The present invention relates to the production of composite styrenic profiles having a core and an outer layer and to apparatus for implementing said method.

## Background of the invention

High density foamed polystyrene profiles of 500 kg/m$^3$ or higher are well known in the art of building decoration. They can be produced with sharp edges and smooth surfaces. However, for most applications, it is not required that the density of the profile be the same all through the cross-section of the profile. Obtaining a core of lower density permits to reduce costs without changing the external visual appearance of the profile.

Post-coextruded polystyrene profiles are present on the market. They combine a low density foamed core and a high density non-foamed skin. The skin is applied after the core has exited the calibration unit. These profiles however are prone to delamination in some circumstances. Also, the post-coextrusion process has the disadvantage to involve re-heating of the core prior to the post-coextrusion die. This re-heating tends to cause a lower dimensional stability which can lead to deformations when tensions are released.

Also known is the Co-extrusion Celuka process wherein a hollow extrudate leaves an extrusion head for a directly adjacent cooled calibration unit, wherein 1) the die lip of the extrusion head has the same cross-section as the entry of the calibration unit, 2) in the calibration unit, the cavity within the hollow extrudate get filled by a foaming process operating from the inner border of the cavity to the center of the cavity, and 3) the outer surface of the extrudate remains non-foamed due to the surface cooling effect of the calibration unit, thereby forming a skin on the foamed profile. This process however has several drawbacks. First, when applied to polystyrene, it cannot easily achieve average core densities lower than 350 g/l due to coalescence of the cells in the center of the cavity's cross-section. Second, the density of the foam is non-uniform through the core cross-section with smaller cells closer to the inner border and larger cells closer to the center, reducing its similarity to quality materials such as wood or plaster. Third, the skin of the profile is shiny and plastic like, also reducing its similarity to quality materials such as wood or plaster.

JP 2001 277399 A discloses a process for manufacturing a plastic composite profile, having a foamed core surrounded by an outer layer of a higher density comprising the steps of: a) plasticizing a first polymer composition in a first extruder, said first polymer composition comprising a styrenic polymer composition and a first foaming agent, b) plasticizing a second polymer composition in a second extruder, said second polymer composition comprising a styrenic polymer composition, c) feeding the plasticized first and second polymer composition to a coextrusion die so as to form a plastic composite having a core formed of said first composition and an outer layer made of said second polymer composition surrounding at least partly said core , said outer layer having an inner surface contiguous with said core and an external surface, d) converting said plastic composite into a shaped plastic extrudate by passing said plastic composite through an extrusion head having a die-lip of cross-sectional area and shape adequate for achieving the cross-sectional area and shape of a calibration unit at the end of step (f), e) said core freely foaming over a free-foaming distance upon exiting the die-lip without said freely-foaming core contacting any surface of said calibration unit, f) said free-foaming distance being adequate for the cross-sectional area and shape of said shaped plastic extrudate to reach the cross-sectional area and shape of said calibration unit g) passing the foamed shaped plastic extrudate obtained at the end of step in said calibration unit , thereby providing said plastic composite profile.

There is therefore a need in the art for new methods and apparatus permitting to overcome one or more limitations of the prior art listed above.

## Summary of the invention

It is an object of the present invention to provide good apparatus or methods for providing plastic composite profiles having a foamed core of density lower than 400 Kg/m$^3$ at least partly surrounded by an outer layer of density higher than 500 Kg/m$^3$.

An advantage of embodiments of the present invention is that it permits the manufacturing of such plastic composite profiles without risk of delamination between the core and the outer layer.

Another advantage of embodiments of the present invention is that it permits the obtaining of plastic composite profiles which core has a homogeneous foam density.

Another advantage of embodiments of the present invention is that it permits the obtaining of plastic composite profiles having sharp edges and elements of details.

Another advantage of embodiments of the present invention is that it permits the obtaining of plastic composite profiles having a matte surface.

Another advantage of embodiments of the present invention is that the new process involved does not suffer from profile deformation. This is due to the lack of post calibration unit extrusion and therefore the lack of re-heating of the profile once it has gone through the calibration unit. Post co-extrusion requires reheating and easily leads to deformations.

The above objective is accomplished by a method and apparatus according to the present invention.

In a first aspect, the present invention relates to a process for manufacturing a plastic composite according to claim 1.

In a second aspect, the present disclosure relates to an apparatus for implementing the process according to the first aspect. It comprises:

a. A first extruder for plasticizing said first polymer composition,
b. A second extruder for plasticizing said second polymer composition,
c. A coextrusion die connected to the output ends of the first and the second extruder and suitable for providing as output a plastic composite having a core formed from said first composition and an outer layer formed from said second composition,
d. An extrusion head for converting said plastic composite into a shaped plastic extrudate, said extrusion head having an exit die-lip of a first cross-sectional area and a first shape,
e. An input for a lubricant situated downstream of the output of the second extruder and upstream of the exit die-lip of the extrusion head,
f. A calibration unit having an entrance at a certain distance (9) of the extrusion head, said entrance having a second cross-sectional area and a second shape,

wherein said first cross-sectional area and said first shape of said exit die lip as well as said distance (9) are adequate for the cross-sectional area and shape of said shaped plastic extrudate to reach the second cross-sectional area and second shape of said entrance of said calibration unit within a certain tolerance T of the point of entry of said shaped plastic extrudate in said calibration unit, wherein T is ±0.2 cm.

In a third aspect, the present disclosure relates to a profile obtainable by any embodiment of the method of the first aspect.

**Brief description of the drawings**

Fig. 1 is a schematic illustration of an apparatus according to an embodiment of the second aspect of the present invention during production following a process according to an embodiment of the first aspect of the present invention.
Fig. 2 is a schematic illustration of the cross-section of a plastic composite as obtained at the exit of the coextruder during a process according to an embodiment of the first aspect of the present invention.
Fig. 3 is a schematic illustration of the cross-section of plastic composite profile obtained as the result of a process according to an embodiment of the first aspect of the present invention.
Fig. 4 is a schematic explanation of what means elements of detail or edges having a "radius".

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" means that with respect to the present invention, the only relevant components of the device are A and B.

Similarly, it is to be noticed that the term "coupled", also used herein, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The first aspect relates to a process for manufacturing a plastic composite profile, of any cross-section, having a foamed core of density lower than 400 Kg/m$^3$ at least partly surrounded by an outer layer of density higher than 500 Kg/m$^3$, said process comprising the steps of:

a. Plasticizing a first polymer composition in a first extruder,
b. Plasticizing a second polymer composition in a second extruder,
c. Feeding the plasticized first and second polymer composition to a coextrusion die so as to form a plastic composite having a core formed of said first composition and an outer layer made of said second polymer composition surrounding at least partly said core,
d. Converting said plastic composite into a shaped plastic extrudate by passing said plastic composite through an extrusion head,
e. Contacting said outer layer of said plastic composite with a lubricant downstream from said feeding of said second polymer composition and either before or during conversion step (d),
f. Allowing the core and optionally the outer layer of said shaped plastic extrudate to freely foam over a certain distance (9), and
g. Passing the foamed shaped plastic extrudate obtained at the end of step (f) in said calibration unit, thereby providing said plastic composite profile.

The plastic composite profile of the first aspect preferably includes sharp edges and/or elements of details having small radiuses. In an embodiment, said plastic composite profile may have very sharp elements of detail (D) or edges (E), having a radius R of 1 mm or less.

The profiles produced by the method of the present invention are advantageous because they can be obtained with one or more of the following properties:

- sharp edges and/or elements of details,
- a smooth surface,
- a matte surface.

On another hand, the plastic composite profiles of the first aspect all have an outer layer relatively denser and therefore harder than their core. This provides the profiles with the necessary mechanical properties while making them lighter (and therefore less expensive) than profiles of homogeneous cross-section and comparable hardness. This is also advantageous because less material is used to obtain the same visual effect for a much lower production price on one hand and a lower ecological impact on another hand.

Furthermore, the plastic composite profiles of the first aspect may have a homogeneous foam density and/or may be resistant to delamination.

The manufactured profile has a foamed core and an outer layer.

The foamed core has a density below 250 Kg/m$^3$, and most preferably below 200 Kg/m$^3$. This is advantageous as a lower core density permits an overall lighter, more economical and more ecological profile.

Typically, the density obtained for the core is above 20 Kg/m$^3$.

The foamed structure of the core results from the action of the foaming agent. In embodiments of the present invention, the foamed core obtained by the method of the first aspect may have typically a closed cell structure. The cross-section of the core can be any cross-section.

Due to the process used, the core and the outer layer typically are bound to one another and delaminating in the final profile is avoided. This is a major advantage compared to what is generally observed in e.g. a post co-extrusion process where an outer layer is extruded on an already shaped and cooled extruded core. Without being bound by theory, it is believed that the good bounding of the outer layer on the core is due to some degree of mixing between the first polymer material and the second polymer material at the interface outer layer-core and to the absence of lubricant at the interface core-outer layer.

In the produced profile, the outer layer surrounds at least partly the core. In an embodiment, the outer layer may be present at least on all the essential parts of the final profile. This means that in some embodiments, non-essential parts of the final profile may be without outer layer and may have the core surfacing. Non-essential parts of the final profile are parts that will not be visible once the profile is in use (e.g. fixed against a wall). Preferably, in the cross-section of the profile, the outer layer surrounds completely the core. Obviously, the core surfaces present at the two extremities of the profile are not covered by the outer layer. This is however not disadvantageous as these surfaces are always hidden in use.

The outer layer has a density higher than 600 $Kg/m^3$, preferably above 700 $Kg/m^3$, yet more preferably above 850 $Kg/m^3$.

Non-foamed polystyrene has a density of about 1050 $Kg/m^3$. The outer layer has therefore preferably a density below 1000 $Kg/m^3$, and more preferably below 950 $Kg/m^3$. An at least slightly foamed outer layer has the advantage to present a matte aspect. A matte aspect provides a nobler touch and visual aspect to a surface, making it more wood-like or plaster-like and less plastic-like.

A slight foaming of the outer layer (e.g. to achieve a density of from 850 to 1000 $Kg/m^3$) is advantageously achieved by using a chemical foaming agent in the composition of the second polymer composition. A chemical foaming agent is more easily dosed to the small amount required.

The outer layer has a thickness of 0.2-0.8 mm.

The first step of the method (step a) comprises plasticizing a first polymer composition in a first extruder. The first polymer composition comprises a styrenic polymer composition and a foaming agent.

Preferred styrenic polymer compositions may comprise or consist of one or more polystyrene polymers, preferably substantially polystyrene (that is, greater than 80 percent by weight) and most preferably are entirely consisting of polystyrene because polystyrene foam is economical, and may form good profiles with smooth surface and sharp edges when used according to embodiments of the present invention. For instance, a general purpose polystyrene (GPPS) is suitable. As another optional feature to any embodiment of the present invention the styrenic polymer composition comprises or consists of one or more polystyrene polymers. The styrenic polymer composition may further include minor proportions of non-styrenic polymers. The styrenic polymer compositions may have a calculated or measured melt flow index of between 1.5 and 18 g/10min, preferably of between 2.5 and 9 g/10min at 200 °C under a load of 5 Kg according to ISO 1133.

As another optional feature to any embodiment of the present invention, the styrenic polymer composition may comprise two or more styrenic polymers of different melt flow indices. This is advantageous because the combining of two polymers having different melt flow indices enables optimisation of the strength of the styrenic polymer foam obtained on one hand and the foamability of the styrenic polymer composition on the other hand.

For instance, the styrenic polymer composition can consist in a blend of a first styrenic polymer having a relatively high melt flow index (MFI) and a second styrenic polymer having a relatively low MFI. The use of such a blend can be advantageous because the lower MFI polymer provides improved strength and/or hardness and the higher MFI polymer is easier to foam and/or permits to obtain profiles with sharper edges and/or sharper details. Playing on the ratio of polymers having different MFI permits therefore to optimize the process and the properties of the obtained foam. The styrenic polymer composition has preferably a calculated or measured (according to ISO 1133, at 200 °C under a load of 5 Kg) melt flow index (MFI) of between 1.5 and 18 g/10min, preferably of between 2.5 and 9 g/10min. In order to calculate the melt flow index of a mixture having two or more components, the following evaluation method can be used if the MFI and the weight fraction of each component is known:

$$Log(MFI_{mixture}) = \sum_{i=1} W_i Log(MFI_i),$$

wherein $MFI_{mixture}$ is the melt flow index of the mixture, $W_i$ is the weight fraction of component i and $MFI_i$ is the melt flow index of component i.

The Vicat temperature of the styrenic polymer composition is preferably 90 to 110°C, more preferably 95 to 105°C. This is advantageous because these ranges are good compromise between the ease of foaming and the possibility to obtain profiles with sharp edges. With those relatively high Vicat temperatures, stiffness of the cell structure is reached at a relatively high temperature, i.e. fast enough upon cooling to obtain a profile keeping its shape.

The first extruder **is** a single screw extruder. One or more dosing units are preferably coupled to the extruder. The dosing units for the styrenic polymer composition, the chemical foaming agent and the optional additives are preferably coupled to the feeder of the extruder while the dosing unit for the foaming agent can be either coupled to the feeder or coupled to an injection port downstream to the feeder. The extruder is preferably divided in several zones controllable in temperature.

The foaming agent present in the first polymer composition is in an amount adequate to form a foam having a density lower than 400 $Kg/m^3$ in said core of said plastic composite profile. This amount is better determined experimentally by trial and errors. This amount will depend on the foaming agent chosen, details of the apparatus and details of the process. For instance, some gas could be lost if the apparatus is not air-tight. Examples of usable foaming agents are physical foaming agent such as $CO_2$, nitrogen and pentane. Chemical foaming agents reacting to form $CO_2$ or nitrogen can also be used alone or in combination with a physical foaming agent. In an embodiment, the first foaming agent may be the physical foaming agent $CO_2$ or a combination of the physical foaming agent $CO_2$ and of a chemical blowing agent releasing $CO_2$.

Adequate amounts of $CO_2$ (as a single physical blowing agent or as a combination of a physical blowing agent and the $CO_2$ released by a chemical blowing agent) are for instance from 0.3 to 3 wt%, preferably 0.4 to 2 wt%, more preferably 0.5 to 1 wt%, and most preferably from 0.5 to 0.8wt% of the polymer composition.

The second step of the method (step b) comprises plasticizing a second polymer composition in a second extruder.

The second styrenic composition can be as described for any embodiment of the first styrenic composition. The first and second polymer compositions may be based on the same styrenic polymer compositions or on different styrenic polymer compositions. In any case, the amount of the second foaming agent is adequate to induce a density as described for any embodiment of the outer layer described above. For instance, the amount of the second foaming agent may be adequate to induce a density higher than 500 $Kg/m^3$ in said outer layer of said plastic composite profile or the amount of the second foaming agent may adequate to induce a density higher than 500 $Kg/m^3$ but lower than 1000 $Kg/m^3$. This amount is better determined experimentally by trial and errors. This amount will depend on the foaming agent chosen, details of the apparatus and details of the process. For instance, some gas could be lost if the apparatus is not air-tight. If the same foaming agent is used in both the first and the second polymer composition, the amount of foaming agent present in the second polymer composition may typically be zero or lower than the amount of foaming agent present in the first polymer composition. In an embodiment, the second foaming agent may be a chemical foaming agent releasing $CO_2$ in an amount adequate to induce a density higher than 500 $Kg/m^3$ in said outer layer of said plastic composite profile. Here also, this amount is best determined experimentally for the same reasons as mentioned above. This amount will depend on the chemical blowing agent used, the details of the apparatus used and the details of the process used.

As a non-limitative example, the inventors have noticed that 0.62 wt% of the chemical blowing agent TRACEL™ NC 7155 is theoretically enough to achieve a density of 500$Kg/m^3$. However, in practice, 0.95 to 1wt% are necessary to achieve a density of 500g/l. O.62wt% TRACEL™ NC 7155 corresponds to about 0.1wt% of $CO_2$. The person skilled in the art can use this information to arrive by trial and error to any density he wishes.

In an embodiment, the second foaming agent may be a chemical foaming agent releasing $CO_2$, wherein said $CO_2$ is released in an amount of from 0 to 0.1 wt%, preferably from 0.01 to 0.1 wt%, more preferably from 0.01 to 0.05 wt% calculated on the second polymer composition.

However, the foaming agent does not need to be the same in both the first polymer composition and the second polymer composition.

In an embodiment, the first foaming agent is a physical foaming agent or a combination of a physical foaming agent and a chemical foaming agent, while the second foaming agent may be a chemical foaming agent. This is advantageous because lower densities are easier to achieve with physical foaming agents and the small amount of foaming agent needed for higher densities are more easily dosed by using a chemical foaming agent.

The second extruder can be as described for any embodiment of the first extruder. The second extruder is preferably arranged perpendicularly to the first extruder.

The third step (step c) comprises feeding the output of said first and second extruder to a coextrusion die. The extrusion die is coupled to the output of both extruders and is adapted to provide as output a composite having a cross-section comprising an outer layer and a core. The cross-section can for instance be circular but other shapes are also possible. The coextrusion die is such as to form a plastic composite having a core formed of said first composition and an outer layer made of said second polymer composition surrounding at least partly said core.

In an embodiment, the coextrusion die may comprise a body through which an axial bore passes, a nozzle having a central channel which is fed by the first extruder for forming the core of the composite being mounted in said axial bore. That end of the nozzle lying on the output side of the unit has an outer surface which defines, together with an approximately parallel surface of a counter-piece, a passage (e.g. an annular passage), which converges toward the output end, for the skin material. In this embodiment, a hole is provided in the body and emerges in the bore near a groove. This groove is joined to the passage. A piece is engaged in the hole to ensure the supply of the hole with the second polymer composition originating from the second extruder.

The second polymer composition surrounds at least partly the core. In an embodiment, the outer layer may be present at least on all the essential parts of the final profile. This means that in some embodiments, parts corresponding to non-essential parts of the final profile may be without outer layer and may have the core surfacing. Non-essential parts of the final profile are parts that will not be visible once the profile is in use (e.g. fixed against a wall). Preferably, in the cross-section of the composite, the outer layer surrounds completely the core.

The fourth step (step d) may comprise converting said plastic composite through an extrusion head having a die-lip of cross-sectional area and shape adequate for achieving the cross-sectional area and shape of a calibration unit at the end of step (f).

In an embodiment, the extrusion head may be adapted to gradually transform the section (e.g. a cylindrical section) of the composite into a section whose shape is the shape desired for the profile's section, while ensuring the presence of the outer layer on all the essential parts of the completed profile.

Preferably, the extrusion head is composed of several stacked extrusion plates, each plate having a die defining a cross-sectional shape which increasingly approaches the desired section for the profile on moving further away from the coextrusion die.

Such an extrusion head is advantageous as it permits to keep the same coextrusion die for many different profile cross-sections. The desired cross-section is achieved by changing the one or more plates of the extrusion head. The extrusion head can be of the kind used to make single material profiles. It does not necessarily need to be adapted for co-extrusion. This is economical. The fifth step (step e) comprises contacting said outer layer of said plastic composite with a lubricant downstream from said feeding of said second polymer composition and either before or during conversion step (d),

The lubricant can be any material reducing friction between the second polymer composition and the walls of the extrusion die. Examples of suitable lubricants are fatty acid amides, polyethylene waxes, styrenic waxes and silicone compounds, amongst others. A preferred lubricant is silicon oil. A lubricant is advantageous because it reduces friction between the inner border of the extrusion head or calibration unit and the outer layer of the profile. Silicon oil is particularly effective in this respect.

The lubricant is preferably introduced in the apparatus in such a way as to lubricate the entire outer surface of the outer layer. In embodiments, it may be introduced close to the exit of the coextrusion die, at the beginning of the extrusion head or between the coextrusion die and the extrusion head.

The sixth step (step f) comprises allowing the core and optionally the outer layer of said shaped plastic extrudate to freely foam over a certain distance (9).

By freely foaming it is meant foaming without contact between the foaming material and any surface of the apparatus. During free-foaming, the cross sectional area of the composite increases. The free foaming distance is defined as the distance between the exit die lip and the entrance of the calibrating unit. This distance is chosen adequate for the cross-sectional area and shape of said shaped plastic extrudate to reach the cross-sectional area and shape of said entrance of said calibration unit either substantially exactly or within a certain tolerance T of the point of entry of said shaped plastic extrudate in said calibration unit. T can for instance be $\pm 0.2$ cm. It is preferably $\pm 0.1$ cm and even more preferably $\pm 0.05$ cm.

In an embodiment, the free foaming distance may be from 5 to 20 cm, preferably 10 to 15 cm. These distance ranges have the advantage to allow enough time for the extrudate to achieve the calibration unit cross sectional area and shape within the tolerance T mentioned above.

The seventh step (step g) comprises passing the foamed shaped plastic extrudate obtained at the end of step (f) in said calibration unit, thereby providing said plastic composite profile.

The expansion of the styrenic polymer foam operates slowly and is preferably controlled by passing the foamed shaped plastic extrudate through a calibration unit, optionally controlled in temperature. In order to reduce friction between the calibration unit and the foaming styrenic polymer, one or more of the following can be done in addition to the use of the lubricant:

    a) the geometry of the calibration unit can preferably be adapted to the changing shape of the die output during foaming,
    b) the foam surface may preferably be kept at a temperature below the Tg of the styrenic polymer,
    c) the calibration unit may be preferably coated on its inside with a low-friction coating.

The calibration unit preferably participates in the cooling of the foamed polymeric mixture. The styrenic polymer foam may also pass through a water bath for cooling purpose. The calibration unit can have parallel walls or can have a smaller cross-section at its exit than at its entry (to accommodate a degree of shrinkage in the profile cross-section due to cooling). One or more calibration unit can be used one after another but at least one calibration unit is used. Typically, a first calibration unit has parallel walls and is followed by smaller calibration units (e.g. in water tanks) having decreasing cross-sections. The formed styrenic polymer foam is most conveniently pulled by e.g. a haul off or any other motorized pulling device known from the person skilled in the art. The haul off preferably comprises pads shaped in such a way as to minimize the contact forces of the pads with the surface of the styrenic polymer foam. The styrenic polymer foam has preferably already a stable geometry before it contacts the pulling device (e.g. the haul off pads). The styrenic polymer foam can then be cut to size with e.g. a saw.

In a second aspect, the present disclosure relates to an apparatus for implementing the process according to the first aspect. It comprises:

a. A first extruder for plasticizing said first polymer composition,

b. A second extruder for plasticizing said second polymer composition,

c. A coextrusion die connected to the output ends of the first and the second extruder and suitable for providing as output a plastic composite having a core formed from said first composition and an outer layer formed from said second composition,

d. An extrusion head for converting said plastic composite into a shaped plastic extrudate, said extrusion head having an exit die-lip of a first cross-sectional area and a first shape,

e. An input for a lubricant situated downstream of the output of the second extruder and upstream of the exit die-lip of the extrusion head,

f. A calibration unit having an entrance at a certain distance (9) of the extrusion head, said entrance having a second cross-sectional area and a second shape,

wherein said first cross-sectional area and said first shape of said exit die lip as well as said distance (9) are adequate for the cross-sectional area and shape of said shaped plastic extrudate to reach the second cross-sectional area and second shape of said entrance of said calibration unit within a certain tolerance T of the point of entry of said shaped plastic extrudate in said calibration unit, wherein T is ±0.2 cm.

In an embodiment of the second aspect, the cross-section of the entrance of said calibration unit is 2 to 3 times wider and 5 to 10 times thicker than the cross-section of the exit die-lip.

In an embodiment of the second aspect, the distance (9) may be 5 to 20 cm, preferably 10 to 15 cm.

In an embodiment of the second aspect, the extrusion head is suitable for gradually converting the cross-section of the plastic composite into the cross-section of the exit die-lip.

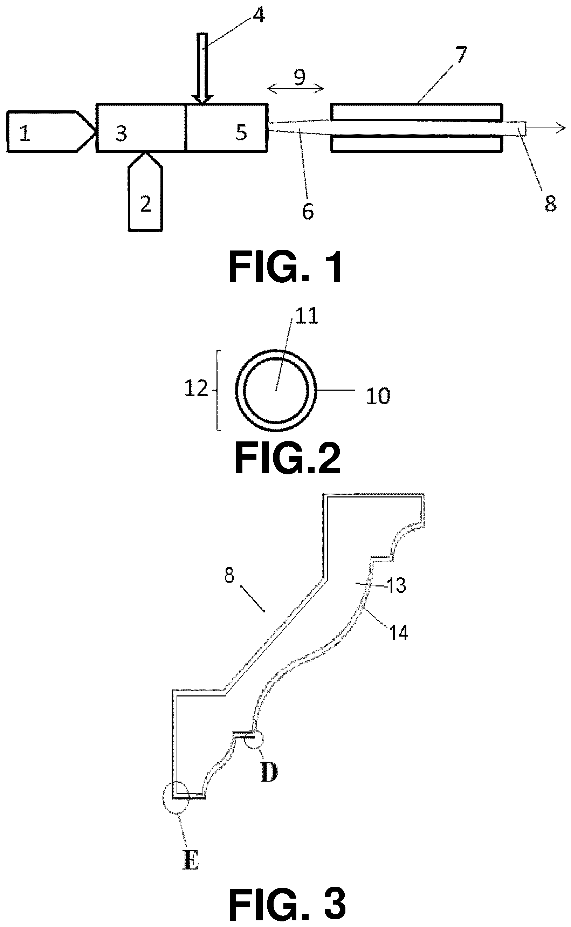

In Fig. 1, a schematic representation of an apparatus according to an embodiment of the second aspect of the present invention is shown. A first extruder (1) and a second extruder (2) are shown connected to a coextrusion die (3). The coextrusion die (3) is adjacent to the extrusion head (5). The arrow (4) shows the point of entry of a lubricant (4). The calibration unit (7) is shown separated from the extrusion head by the free-foaming distance (9).

In operation and according to an embodiment of the present invention, a first polymer composition is plasticized in the first extruder (1) and a second polymer composition is plasticized in the second extruder (2). Next, the outputs of said first (1) and second (2) extruder are fed to a coextrusion die (3) so as to form a plastic composite (12) having a cross-section. An example of cross-section (a circular cross-section) is illustrated in Fig. 2. The plastic composite thereby formed has a core (11) and an outer layer (10).

Next, said plastic composite (12) is converted gradually into a shaped plastic extrudate (6) by passing said plastic composite through an extrusion head (5) comprising a set of adjacent extrusion plates, each plate closer to the exit having a cross-sectional shape closer to the cross-sectional shape of the final profile. The last plate has a die-lip (15) of cross-sectional area and shape adequate (in view of the distance (9)) for the cross-sectional area and shape of said shaped plastic extrudate to reach the cross-sectional area and shape of said entrance of said calibration unit within a certain tolerance T of the point of entry of said shaped plastic extrudate in said calibration unit, wherein T is ±0.2 cm for achieving the cross-sectional area and shape of the calibration unit (7). The lubricant (4) is injected at the beginning of the extrusion head (5). Once the shaped plastic extrudate (6) leaves the extrusion head (5), it foams freely for a certain distance (9) before to enter the calibration unit (7). When leaving the calibration unit (7), the foamed shaped plastic extrudate now has its definitive shape and is referred to as the plastic composite profile (8).

Fig.3 shows an example of plastic composite profile (8) having a core (13), an outer layer (14) and sharp elements of details (D) and edges (E).

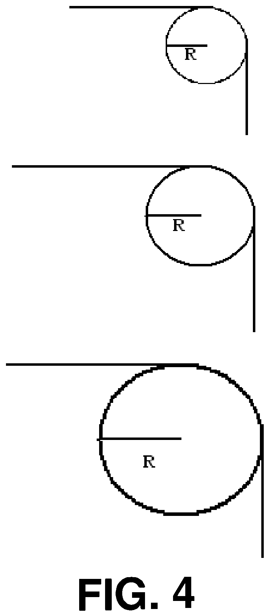

The elements of details (D) and edges (E) obtainable by the present invention may have a radius R of 1 mm or less. The radius of an element of detail or of an edge is evaluated as follow (see Fig. 4): An angle is in theory perfectly sharp and has a radius of zero. In reality, right angles obtained via a manufacture process always appear rounded when observed under sufficient magnification. An angle such as the angle of an edge E or the angle of an element of detail D (see Fig. 3) of a profile can be characterized by the radius R of the circle which curvature equal the curvature of the rounded angle (see Fig 4 for three examples of right angles. From top to bottom, the sharpness decreases and the radius increases). A smaller radius for an element of detail means a sharper detail. A small radius for an edge means a sharp edge.

Particular and preferred aspects of the invention are set out in the accompanying independent and dependent claims. Features from the dependent claims may be combined with features of the independent claims and with features of other dependent claims as appropriate and not merely as explicitly set out in the claims.

## Claims

1. Process for manufacturing a plastic composite profile (8), of any cross-section, having a foamed core (13) of density 250-120 Kg/m$^3$ surrounded by an outer layer (14) of density above 600 Kg/m$^3$ and below 1000 Kg/m$^3$, said process comprising the steps of:

a) plasticizing a first polymer composition in a first, single screw extruder (1), said first polymer composition comprising a styrenic polymer composition and a first foaming agent,
b) plasticizing a second polymer composition in a second extruder (2), said second polymer composition comprising a styrenic polymer composition,
c) feeding the plasticized first (1) and second (2) polymer composition to a coextrusion die (3) so as to form a plastic composite (12) having a core (11) formed of said first composition and an outer layer (10) made of said second polymer composition surrounding at least partly said core (11), said outer layer (10) having an inner surface contiguous with said core (11) and an external surface,
d) converting said plastic composite (12) into a shaped plastic extrudate (6) by passing said plastic composite through an extrusion head (5) having a die-lip (15) of cross-sectional area and shape adequate for achieving the cross-sectional area and shape of a calibration unit (7) at the end of step (f),
e) said core (11) freely foaming over a free-foaming distance (9) upon exiting the die-lip (15) without said freely-foaming core contacting any surface of said calibration unit,
f) wherein said free-foaming distance being adequate for the cross-sectional area and shape of said shaped plastic extrudate (6) to reach the cross-sectional area and shape of said calibration unit (7) within a tolerance T of the point of entry of said shaped plastic extrudate (6) in said calibration unit (7), wherein T is ±0.2 cm.
g) use of any material reducing friction between the second polymer composition and the walls of the extrusion die, and
h) passing the foamed shaped plastic extrudate (6) obtained at the end of step (f) in said calibration unit (7), thereby providing said plastic composite profile (8);

wherein said outer layer (14) of said plastic composite profile (8) has a thickness of 0.2-0.8 mm.

2. The process of claim 1, wherein the foamed core (13) has a density 200-120 Kg/m$^3$.

3. The process of claim 1 or 2, wherein the density of the core is 120 Kg/m$^3$ to 180 Kg/m$^3$.

4. The process of any of the previous claims, wherein the step of reducing friction comprises contacting said outer layer (10) of said plastic composite (12) with a lubricant (4) downstream from said feeding of said second polymer composition and either before or during conversion step (d).

5. The process of claim 4, wherein said lubricant (4) is a silicone oil.

6. The process according to any one of the claims 1 to 5, wherein the free foaming distance (9) is from 5 to 20 cm, or 10 to 15 cm.

7. The process according to claim 1, wherein T is ±0.1 cm, or ± 0.05 cm.

8. The process according to any of the preceding claims, wherein said first foaming agent is $CO_2$.

9. The process according to claim 8, wherein said $CO_2$ is present in said first polymer composition in an amount of from 0.3 to 3 wt%, preferably 0.4 to 2 wt%, more preferably 0.5 to 1 wt%, and most preferably 0.5-0.8 wt% of the first polymer composition.

10. The process according to any of the preceding claims, wherein said second foaming agent is a chemical foaming agent releasing $CO_2$ and wherein the amount of chemical foaming agent is such as to release from 0 to 0.1 wt%, preferably 0.01 to 0.1 wt% $CO_2$ calculated on the second polymer composition.

11. The process according to any of the preceding claims, wherein said plastic composite profile (8) has very sharp elements of detail (D) or edges (E) having a radius R of 1 mm or less.

12. The process according to any of the preceding claims, further comprising a second foaming of said second polymer composition.

13. The process according to any of the preceding claims, further comprising allowing the outer layer (14) of said shaped plastic extrudate (6) to freely foam over the distance (9) adequate for the cross-sectional area and shape of said shaped plastic extrudate (6) to reach the cross-sectional area and shape of said calibration unit (7) within a tolerance T of the point of entry of said shaped plastic extrudate (6) in said calibration unit (7), wherein T is ± 0.2 cm.

**Patentansprüche**

1. Verfahren zur Herstellung eines Kunststoffverbundprofils (8) mit beliebigem Querschnitt, das einen geschäumten Kern (13) mit einer Dichte von 250 bis 120 kg/m$^3$ aufweist, der von einer Außenschicht (14) mit einer Dichte von über 600 kg/m$^3$ und unter 1000 kg/m$^3$ umgeben ist, wobei das Verfahren die folgenden Schritte umfasst:

a) Plastifizieren einer ersten Polymerzusammensetzung in einem ersten Einschneckenextruder (1), wobei die erste Polymerzusammensetzung eine Styrolpolymerzusammensetzung und ein erstes Schaummittel umfasst,

b) Plastifizieren einer zweiten Polymerzusammensetzung in einem zweiten Extruder (2), wobei die zweite Polymerzusammensetzung eine Styrolpolymerzusammensetzung umfasst,

c) Zuführen der plastifizierten ersten (1) und zweiten (2) Polymerzusammensetzung zu einer Koextrusionsdüse (3), um einen Kunststoffverbundstoff (12) zu bilden, der einen Kern (11) aufweist, der aus der ersten Zusammensetzung gebildet ist, und eine Außenschicht (10) aus der zweiten Polymerzusammensetzung, die den Kern (11) zumindest teilweise umgibt, wobei die Außenschicht (10) eine Innenfläche, die an den Kern (11) angrenzt, und eine Außenfläche aufweist,

d) Umwandeln des Kunststoffverbundstoffs (12) in ein geformtes Kunststoffextrudat (6), indem der Kunststoffverbundstoff durch einen Extrusionskopf (5) mit einer Düsenlippe (15) mit einer Querschnittsfläche und einer Form, die geeignet sind, um die Querschnittsfläche und die Form einer Kalibriereinheit (7) am Ende von Schritt (f) zu erreichen, durchgeleitet wird,

e) wobei der Kern (11) beim Austritt aus der Düsenlippe (15) über eine Freischäumstrecke (9) frei aufschäumt, ohne dass der frei aufschäumende Kern eine Oberfläche der Kalibriereinheit berührt,

f) wobei die Freischäumstrecke ausreichend ist, damit die Querschnittsfläche und Form des geformten Kunststoffextrudats (6) die Querschnittsfläche und Form der Kalibriereinheit (7) innerhalb einer Toleranz T des Eintrittspunkts des geformten Kunststoffextrudats (6) in die Kalibriereinheit (7) erreicht, wobei T $\pm$ 0,2 cm beträgt.

g) Verwendung eines beliebigen Materials, das die Reibung zwischen der zweiten Polymerzusammensetzung und den Wänden der Extrusionsdüse verringert, und

h) Durchleiten des am Ende von Schritt (f) erhaltenen geschäumten geformten Kunststoffextrudats (6) durch die Kalibriereinheit (7), wodurch das Kunststoffverbundprofil (8) bereitgestellt wird; wobei die äußere Schicht (14) des Kunststoffverbundprofils (8) eine Dicke von 0,2 bis 0,8 mm aufweist.

2. Verfahren nach Anspruch 1, wobei der geschäumte Kern (13) eine Dichte von 200 bis 120 kg/m$^3$ aufweist.

3. Verfahren nach Anspruch 1 oder 2, wobei die Dichte des Kerns 120 kg/m$^3$ bis 180 kg/m$^3$ beträgt.

4. Verfahren nach einem der vorstehenden Ansprüche, wobei der Schritt zum Verringern der Reibung das Inkontaktbringen der äußeren Schicht (10) des Kunststoffverbunds (12) mit einem Schmiermittel (4) stromabwärts von der Zuführung der zweiten Polymerzusammensetzung und entweder vor oder während des Umwandlungsschritts (d) umfasst.

5. Verfahren nach Anspruch 4, wobei das Schmiermittel (4) ein Silikonöl ist.

6. Verfahren nach einem der Ansprüche 1 bis 5, wobei die Freischäumstrecke (9) 5 bis 20 cm oder 10 bis 15 cm beträgt.

7. Verfahren nach Anspruch 1, wobei T $\pm$ 0,1 cm oder $\pm$ 0,05 cm beträgt.

8. Verfahren nach einem der vorstehenden Ansprüche, wobei das erste Schaummittel $CO_2$ ist.

9. Verfahren nach Anspruch 8, wobei das $CO_2$ in der ersten Polymerzusammensetzung in einer Menge von 0,3 bis 3 Gew.-%, vorzugsweise 0,4 bis 2 Gew.-%, noch bevorzugter 0,5 bis 1 Gew.-% und am meisten bevorzugt 0,5 bis 0,8 Gew.-% der ersten Polymerzusammensetzung vorhanden ist.

10. Verfahren nach einem der vorstehenden Ansprüche, wobei das zweite Treibmittel ein chemisches Treibmittel ist, das $CO_2$ freisetzt, und wobei die Menge des chemischen Treibmittels so bemessen ist, dass 0 bis 0,1 Gew.-%, vorzugsweise 0,01 bis 0,1 Gew.-%, $CO_2$, berechnet auf die zweite Polymerzusammensetzung, freigesetzt werden.

11. Verfahren nach einem der vorstehenden Ansprüche, wobei das Kunststoffverbundprofil (8) sehr scharfe Detailelemente (D) oder Kanten (E) mit einem Radius R von 1 mm oder weniger aufweist.

12. Verfahren nach einem der vorstehenden Ansprüche, das ferner ein zweites Aufschäumen der zweiten Polymerzusammensetzung umfasst.

13. Verfahren nach einem der vorstehenden Ansprüche, das ferner umfasst, dass die äußere Schicht (14) des geformten Kunststoffextrudats (6) über die für die Querschnittsfläche und Form des geformten Kunststoffextrudats (6) ausreichende Strecke (9) frei schäumen kann, die für die Querschnittsfläche und Form des geformten Kunststoffextrudats (6) ausreichend ist, um die Querschnittsfläche und Form der Kalibriereinheit (7) innerhalb einer Toleranz T des Eintrittspunkts des geformten Kunststoffextrudats (6) in die Kalibriereinheit (7) zu erreichen, wobei T ± 0,2 cm beträgt.

**Revendications**

1. Processus de fabrication d'un profilé composite plastique (8), de n'importe quelle section transversale, ayant un noyau expansé (13) de densité 250-120 $kg/m^3$ entouré par une couche extérieure (14) de densité supérieure à 600 $kg/m^3$ et inférieure à 1 000 $kg/m^3$, ledit processus comprenant les étapes de :

   a) plastification d'une première composition polymère dans une première extrudeuse à vis unique (1), ladite première composition polymère comprenant une composition polymère styrénique et un premier agent d'expansion,
   b) plastification d'une seconde composition polymère dans une seconde extrudeuse (2), ladite seconde composition polymère comprenant une composition polymère styrénique,
   c) amenée des première (1) et seconde (2) compositions polymères plastifiées à une filière de co-extrusion (3) de manière à former un composite plastique (12) ayant un noyau (11) formé de ladite première composition et une couche extérieure (10) constituée de ladite seconde composition polymère entourant au moins partiellement ledit noyau (11), ladite couche externe (10) ayant une surface intérieure contiguë audit noyau (11) et une surface externe,
   d) transformation dudit composite plastique (12) en un extrudé plastique mis en forme (6) en faisant passer ledit composite plastique à travers une tête d'extrusion (5) ayant une lèvre de filière (15) de surface et de forme en coupe transversale adéquates pour parvenir à la forme et la surface en coupe transversale d'une unité d'étalonnage (7) à la fin de l'étape (f),
   e) ledit noyau (11) subissant une expansion librement sur une distance d'expansion libre (9) lors de la sortie de la lèvre de filière (15) sans que ledit noyau en expansion libre n'entre en contact avec une quelconque surface de ladite unité d'étalonnage,
   f) dans lequel ladite distance d'expansion libre est adéquate pour que la forme et la surface en coupe transversale dudit extrudé plastique mis en forme (6) atteignent la forme et la surface en coupe transversale de ladite unité d'étalonnage (7) dans les limites d'une tolérance T du point d'entrée dudit extrudé plastique mis en forme (6) dans ladite unité d'étalonnage (7), dans laquelle T est de ± 0,2 cm,
   g) utilisation de n'importe quel matériau réduisant la friction entre la seconde composition polymère et les parois de la filière d'extrusion, et
   h) passage de l'extrudé plastique mis en forme expansé (6) obtenu à la fin de l'étape (f) dans ladite unité d'étalonnage (7), fournissant de ce fait ledit profilé composite plastique (8) ;

   dans lequel ladite couche extérieure (14) dudit profilé composite plastique (8) a une épaisseur de 0,2 à 0,8 mm.

2. Processus selon la revendication 1, dans lequel le noyau expansé (13) a une densité de 200-120 $kg/m^3$.

3. Processus selon la revendication 1 ou 2, dans lequel la densité du noyau est de 120 $kg/m^3$ à 180 $kg/m^3$.

4. Processus selon l'une quelconque des revendications précédentes, dans lequel l'étape de réduction de la friction comprend la mise en contact de ladite couche extérieure (10) dudit composite plastique (12) avec un lubrifiant (4) en aval de ladite amenée de ladite seconde composition polymère et soit avant soit pendant l'étape de transformation (d).

5. Processus selon la revendication 4, dans lequel ledit lubrifiant (4) est une huile de silicone.

6. Processus selon l'une quelconque des revendications 1 à 5, dans lequel la distance d'expansion libre (9) est de 5 à 20 cm, ou de 10 à 15 cm.

7. Processus selon la revendication 1, dans lequel T est de ± 0,1 cm, ou de ± 0,05 cm.

8. Processus selon l'une quelconque des revendications précédentes, dans lequel ledit premier agent d'expansion est du $CO_2$.

9. Processus selon la revendication 8, dans lequel ledit $CO_2$ est présent dans ladite première composition polymère en une quantité de 0,3 à 3 % en poids, de préférence de 0,4 à 2 % en poids, plus préférablement de 0,5 à 1 % en poids, et très préférablement de 0,5 à 0,8 % en poids de la première composition polymère.

10. Processus selon l'une quelconque des revendications précédentes, dans lequel ledit second agent d'expansion est un agent d'expansion chimique libérant du $CO_2$ et dans lequel la quantité d'agent d'expansion chimique est telle qu'elle libère de 0 à 0,1 % en poids, de préférence de 0,01 à 0,1 % en poids de $CO_2$ calculé sur la seconde composition polymère.

**11.** Processus selon l'une quelconque des revendications précédentes, dans lequel ledit profilé composite plastique (8) présente des éléments de détail (D) ou des arêtes (E) très nets ayant un rayon R de 1 mm ou moins.

**12.** Processus selon l'une quelconque des revendications précédentes, comprenant en outre une seconde expansion de ladite seconde composition polymère.

**13.** Processus selon l'une quelconque des revendications précédentes, comprenant en outre le fait de permettre à la couche extérieure (14) dudit extrudé plastique mis en forme (6) de subir une expansion librement sur la distance (9) adéquate pour que la forme et la surface en coupe transversale dudit extrudé plastique mis en forme (6) atteignent la forme et la surface en coupe transversale de ladite unité d'étalonnage (7) dans les limites d'une tolérance T du point d'entrée dudit extrudé plastique mis en forme (6) dans ladite unité d'étalonnage (7), dans lequel T est de $\pm$ 0,2 cm.

**FIG. 1**

**FIG.2**

**FIG. 3**

# FIG. 4

**EP 3 424 667 B1**

**Patent documents cited in the description**

- JP 2001277399 A